# EUROPEAN PATENT SPECIFICATION

(11) **EP 3 096 505 B1**
(45) Date of publication and mention of the grant of the patent: **08.11.2017**
(21) Application number: 16159961.8
(22) Date of filing: 11.03.2016
(51) Int. Cl.: H04L 29/08, H04L 12/28, H04L 12/66

(54) **METHOD AND APPARATUS FOR PROCESSING INTERACTIONS BETWEEN DEVICES**
VERFAHREN UND VORRICHTUNG ZUR VERARBEITUNG VON INTERAKTIONEN ZWISCHEN VORRICHTUNGEN
PROCÉDÉ ET APPAREIL DE TRAITEMENT D'INTERACTIONS ENTRE DES DISPOSITIFS

(30) Priority: 20.05.2015 CN 201510260776
(43) Date of publication of application: 23.11.2016
(73) Proprietor: Xiaomi Inc., Beijing 100085 (CN)
(72) Inventor: SU, Benchang, Beijing 100085 (CN); HOU, Enxing, Beijing 100085 (CN); GAO, Ziguang, Beijing 100085 (CN)
(74) Representative: Robson, Aidan John

(56) References cited:
- US-A1- 2012 158 161
- US-A1- 2014 289 387

## Description

### TECHNICAL FIELD

The present disclosure generally relates to a field of wireless network technology, and more particularly, to a method and an apparatus for processing interactions between devices.

### BACKGROUND

A gateway is also called a network connector and a protocol converter and is a complex device configured to realize an interconnection between devices above a network layer. The gateway is commonly used for a connection of two networks with different high layer protocols respectively and is a "pass" of a network connecting to another network. In an Internet network, the gateway is an intermediate device configured to connect an internal network with other devices in the Internet, and is also called as a "router"; some devices using non-TCP/IP protocols must communicate with other devices in the Internet via a special network.

In a field of current smart homes, a plurality of wireless protocols (such as a Bluetooth protocol and a Zigbee protocol) has been applied. These devices communicate with one another by using their own protocols and communicate with the other devices in the Internet by converting the protocols via the gateway. An interaction logic between the devices is managed by a server.

In US patent application publication number US 2012/0158161 A1 (Cohn et al.) a single controller platform for controlling and monitoring security, home automation, and monitoring devices is provided. This controller platform further provides for a rules-based response to receiving sensor events, including causing actions to be performed by the controller platform or to cause actions to be performed by sensor devices.

In US patent application publication number US 2014/0289387 A1 (Ghosh et al.) a system, medium and method of managing, via a gateway device, to wirelessly communicate with a plurality of network appliances in a closed local area network is disclosed. A data message is received from a first network appliance configured to communicate data in association with a first application profile. The first application profile is retrieved from a locally stored application profile database upon being identified. A database is accessed at the gateway device containing policy information of the first network appliance and evaluated for one or more policy parameters. A first instruction command is generated at the gateway device based on the accessed policy information, wherein the instruction command conforms with the first application profile to instruct the first network appliance to perform a specified action. The instruction command is wirelessly transmitted from the gateway device to the first network appliance to cause it to perform a specified action.

### SUMMARY

Embodiments of the present disclosure provide a method and an apparatus for processing interactions between devices, so as to reduce a burden of the server, improve an execution efficiency of an interaction logic between the devices and avoid a problem that a response speed is low or there is no response as a result of a communication block. According to one aspect of the present invention, there is provided a method as defined in claim 1 hereinafter.

According to another aspect of the present invention, there is provided an apparatus as defined in claim 7 hereinafter.

According to another aspect of the present invention, there is provided a non-transitory computer-readable storage medium as defined in claim 14 hereinafter.

Preferred embodiments are set out in the dependent claims.

Technical solutions provided by the present disclosure have following significant effects.

The above technical solutions manage the interaction logic between the devices via the gateway, which reduces the burden of the server and improves the execution efficiency of the interaction logic between the devices. Moreover, since the interactions between the devices do not need to be performed by using the server again, the problem that the response speed is low or there is no response as a result of a communication block between the device and the server is avoided.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for processing interactions between devices, according to an exemplary embodiment.
Fig. 2 is a flow chart showing another method for processing interactions between devices, according to an exemplary embodiment.
Fig. 3 is a flow chart showing another method for processing interactions between devices, according to an exemplary embodiment.
Fig. 4 is a flow chart showing another method for processing interactions between devices, according to an exemplary embodiment.
Fig. 5 is a flow chart showing a method for processing interactions between devices, according to another exemplary embodiment.
Fig. 6 is a flow chart showing another method for processing interactions between devices, according to another exemplary embodiment.
Fig. 7 is a flow chart showing another method for processing interactions between devices, according to another exemplary embodiment.
Fig. 8 is a block diagram illustrating an apparatus for processing interactions between devices, according to an exemplary embodiment.
Fig. 9 is a block diagram illustrating another apparatus for processing interactions between devices, according to an exemplary embodiment.
Fig. 10 is a block diagram illustrating another apparatus for processing interactions between devices, according to an exemplary embodiment.
Fig. 11 is a block diagram illustrating another apparatus for processing interactions between devices, according to an exemplary embodiment.
Fig. 12 is a block diagram illustrating an apparatus for processing interactions between devices, according to another exemplary embodiment.
Fig. 13 is a block diagram illustrating another apparatus for processing interactions between devices, according to another exemplary embodiment.
Fig. 14 is a block diagram illustrating another apparatus for processing interactions between devices, according to another exemplary embodiment.
Fig. 15 is a block diagram illustrating and adapted for an apparatus for processing interactions between devices, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure.

A technical solution provided by the present disclosure relates to sides: a server, a gateway and a device under the gateway, in which the server is configured to obtain an interaction binding message between the devices and to send the interaction binding message to the gateway; the gateway is configured to store the interaction binding message and to establish a binding relationship between the devices contained in the message according to the interaction binding message, so as to control an operation of another device according to an interaction triggering message of a device. The device under the gateway is configured to send the interaction triggering message to the gateway in a condition of satisfying an interaction triggering requirement, or to receive an interaction execution message sent from the gateway and to operate according to the interaction execution message. In this process, an interaction logic between the devices is managed via the gateway, which reduces the burden of the server and improves the execution efficiency of the interaction logic between the devices. Moreover, since the interactions between the devices do not need to be performed by using the server again, a problem that the response speed is low or there is no response as a result of a communication block between the device and the server is avoided.

Embodiments of the present disclosure provide a method for processing interactions between devices, and an execution body configured to perform the method includes the gateway and the server. Embodiments of the present disclosure arrange the method for processing interactions between devices according to different execution bodies, as described in the following.

### Gateway side

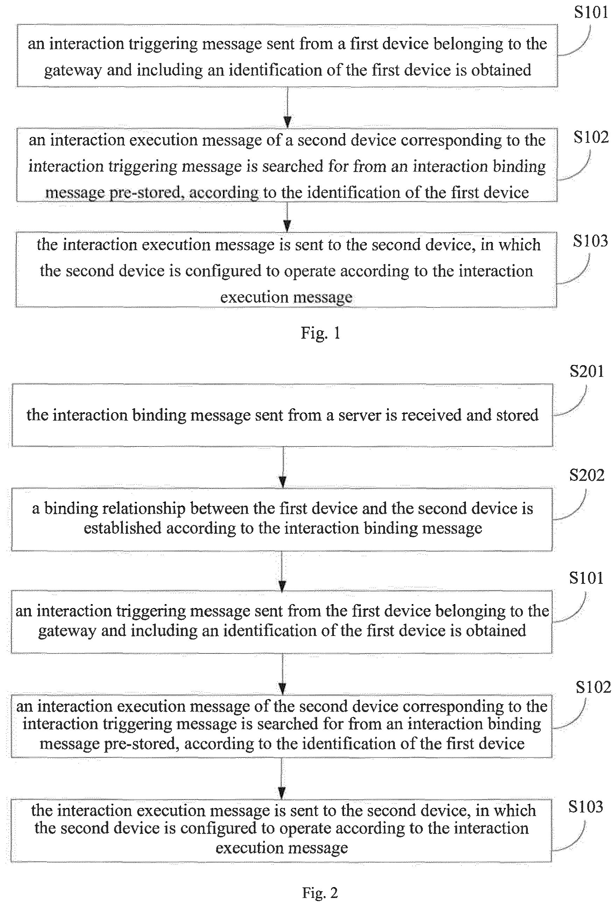

Embodiments of the present disclosure provide a method used in the gateway for processing interactions between devices, as shown in Fig. 1. The above method for processing interactions between devices includes following steps S101-S103.

In step S101, an interaction triggering message sent from a first device belonging to the gateway and including an identification of the first device is obtained.

In step S102, an interaction execution message of a second device corresponding to the interaction triggering message is searched for from an interaction binding message pre-stored, according to the identification of the first device, in which the second device belongs to the gateway and the interaction binding message includes an interaction logic between the first device and the second device.

In an embodiment, the interaction logic is a logic of performing interaction operations between the first device and the second device. For example, the interaction binding message may include the identification of the first device, an identification of the second device, the interaction triggering message of the first device and the interaction execution message of the second device corresponding to the interaction triggering message. Once the gateway receives the interaction triggering message sent from the first device, the second device needs to operate according to the interaction execution message.

In step S103, the interaction execution message is sent to the second device, in which the second device is configured to operate according to the interaction execution message.

The interaction execution message may include operation parameters of the second device. For example, the second device may be an air conditioner, and the interaction execution message includes specific operation parameters of the air conditioner, such as an air conditioner mode, a set temperature and so on, apart from an air conditioner starting message, so as to facilitate operations of the air conditioner.

In this embodiment, the interaction logic between the devices is managed via the gateway, which reduces the burden of the server and improves the execution efficiency of the interaction logic between the devices. Moreover, since the interactions between the devices do not need to be performed by using the server again, the problem that the response speed is low or there is no response as a result of a communication block between the device and the server is avoided.

As shown in Fig. 2, in an embodiment, before step S101, the above method further includes following steps S201-S202.

In step S201, the interaction binding message sent from a server is received and stored.

In step S202, a binding relationship between the first device and the second device is established according to the interaction binding message.

In this embodiment, with the interaction binding message, the binding relationship between the first device and the second device is established, and thus the second device can be controlled to operate according to a state of the first device.

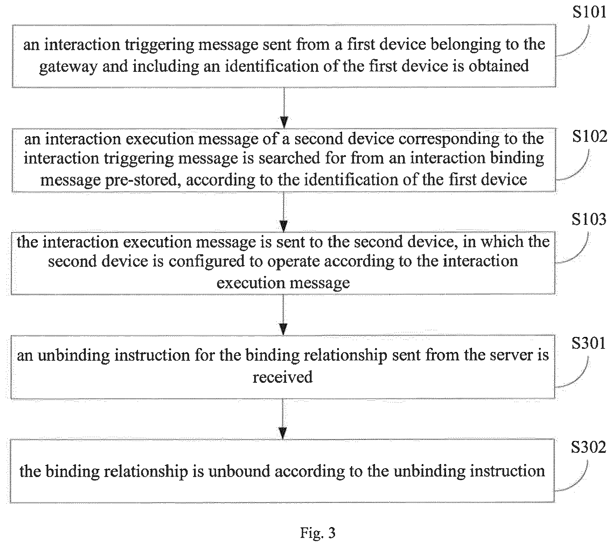

As shown in Fig. 3, in an embodiment, the above method further includes following steps S301-S302.

In step S301, an unbinding instruction for the binding relationship sent from the server is received.

In step S302, the binding relationship is unbound according to the unbinding instruction.

In this embodiment, two devices with the established binding relationship can be unbound, and the two unbound devices will not operate according to the interaction logic in the interaction binding message. In this way, a user can choose to bind or unbind the two devices according to his/her own requirements, so that it is convenient for the user to control the devices, and thus a use experience can be improved.

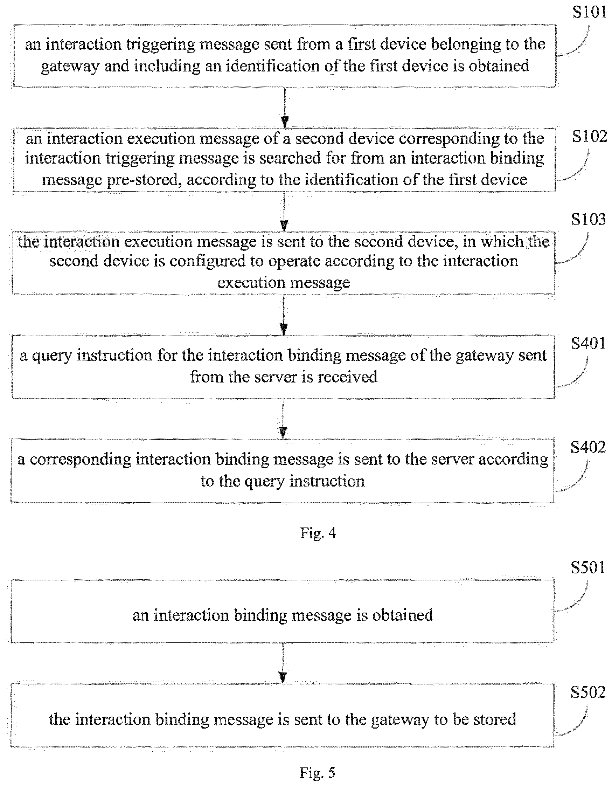

As shown in Fig. 4, in an embodiment, the above method further includes following steps S401- S402.

In step S401, a query instruction for the interaction binding message of the gateway sent from the server is received.

In step S402, a corresponding interaction binding message is sent to the server according to the query instruction.

In this embodiment, all the interaction binding messages or a certain interaction binding message of the gateway can be queried. For example, the user may send a query request to the server, the server sends the query instruction to the gateway according to the query request, the gateway returns a corresponding query result to the server, and the server sends the query result to the user. In this way, the user can view the interaction binding message that he/she intends to query, and thus it is convenient for the user to perform a further operation of the interaction binding message.

### Server side

Embodiments of the present disclosure provide a method used in a server for processing interactions between devices. As shown in Fig. 5, the above method for processing interactions between devices includes following steps S501- S502.

In step S501, an interaction binding message is obtained, the interaction binding message includes an interaction logic between a first device and a second device, and the first device and the second device belong to a same gateway.

In an embodiment, the interaction logic is a logic of performing interaction operations between the first device and the second device. For example, the interaction binding message may include an identification of the first device, an identification of the second device, an interaction triggering message of the first device and an interaction execution message of the second device corresponding to the interaction triggering message. Once the gateway receives the interaction triggering message sent from the first device, the second device needs to operate according to the interaction execution message. The interaction binding message may be input by operation staff of the server, and also may be sent from the first device or the second device. When the interaction binding message cannot be identified, the serve can converts the interaction binding message into the interaction binding message in a format that can be identified by the gateway.

The interaction execution message may include operation parameters of the second device. For example, the second device may be an air conditioner, and the interaction execution message includes specific operation parameters of the air conditioner, such as an air conditioner mode, a set temperature and so on, apart from an air conditioner starting message, so as to facilitate operations of the air conditioner.

In step S502, the interaction binding message is sent to the gateway to be stored and to establish a binding relationship between the first device and the second device.

In this embodiment, the server sends the interaction binding message to the gateway, and the interaction logic between the devices is managed via the gateway, which reduces the burden of the server and improves the execution efficiency of the interaction logic between the devices. Moreover, since the interactions between the devices do not need to be performed by using the server again, the problem that the response speed is low or there is no response as a result of a communication block between the device and the server is avoided.

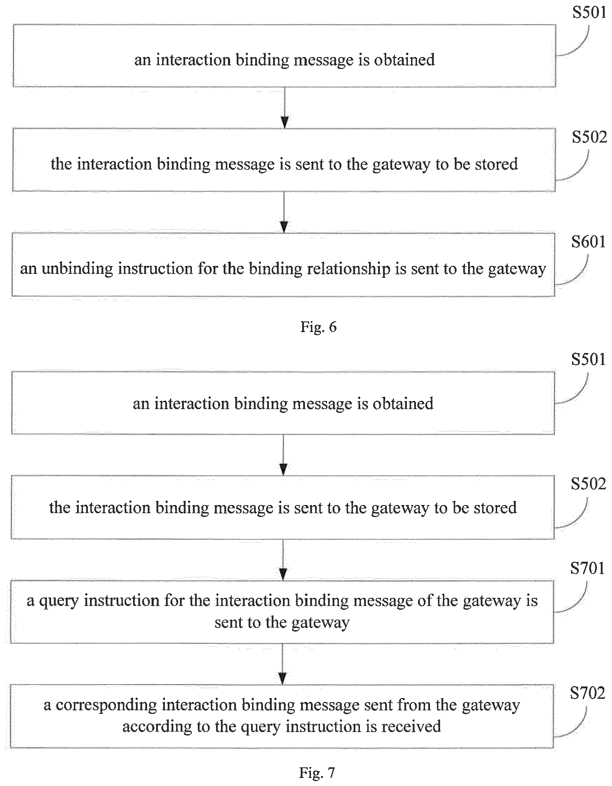

As shown in Fig.6, in an embodiment, the above method further includes step S601.

In step S601, an unbinding instruction for the binding relationship is sent to the gateway, so that the gateway unbinds the binding relationship according to the unbinding instruction.

In this embodiment, two devices with the established binding relationship in the gateway can be unbound, and the two unbound devices will not operate according to the interaction logic in the interaction binding message. In this way, a user can choose to bind or unbind the two devices according to his/her own requirements, so that it is convenient for the user to control the devices, and thus a use experience can be improved.

As shown in Fig. 7, in an embodiment, the above method further includes steps S701-S702.

In step S701, a query instruction for the interaction binding message of the gateway is sent to the gateway.

In step S702, a corresponding interaction binding message sent from the gateway according to the query instruction is received.

In this embodiment, all the interaction binding messages or a certain interaction binding message of the gateway can be queried. For example, the user may send a query request to the server, the server sends the query instruction to the gateway according to the query request, the gateway returns a corresponding query result to the server, and the server sends the query result to the user. In this way, the user can view the interaction binding message that he/she intends to query, and thus it is convenient for the user to perform a further operation of the interaction binding message.

In the following, the technical solution of the present disclosure will be described in details in a specific embodiment.

For example, the user hopes that when detecting that a current air quality is poor, a PM2.5 sensor using a Bluetooth protocol sends an instruction to start a smart air cleaner using the Bluetooth protocol in home, in which these two devices are both connected to a same Bluetooth gateway in the user's home. Thus, the user can set the interaction logic between the devices in a terminal, and a terminal app sends the setting of the user to the server. When detecting the relevant devices set by the user are the devices under the gateway of the user, the server sends the interaction binding message to the gateway. A format of the message is: {sid1,event1,sid2,method2,params}, in which sid1 is an id of device 1; event1 is an interaction triggering message sent from device 1; sid2 is an id of device 2; method2 is an interaction execution message of device 2; params are parameters of the message executed by device 2. The message means that the interaction triggering message event1 of device 1 is bound with the interaction execution message method2 of device 2, i.e., when device 1 generates the interaction triggering message event1, device 2 executes the interaction execution message method2 automatically, and the parameters of method2 are params. Provided that, the interaction triggering message event1 is that the PM2.5 sensor detects that PM2.5 in the air exceeds a standard, and the interaction execution message method2 is starting the smart air cleaner.

Thus, after the Bluetooth PM2.5 sensor of the user detects that PM2.5 in the air exceeds the standard, the Bluetooth PM2.5 sensor sends the interaction triggering message event1 including its own id (sid1) to the gateway. After receiving the message, the gateway finds the interaction logic set by the user in the interaction binding message pre-stored and sends the interaction execution message method2 to the Bluetooth air cleaner (sid2), and the Bluetooth air cleaner starts to operate according to the message.

Thus, the interaction logic between the devices is managed via the gateway, which reduces the burden of the server and improves the execution efficiency of the interaction logic. Moreover, since the interactions between the devices do not need to be performed by using the server again, the problem that the response speed is low or there is no response as a result of a communication block between the device and the server is avoided.

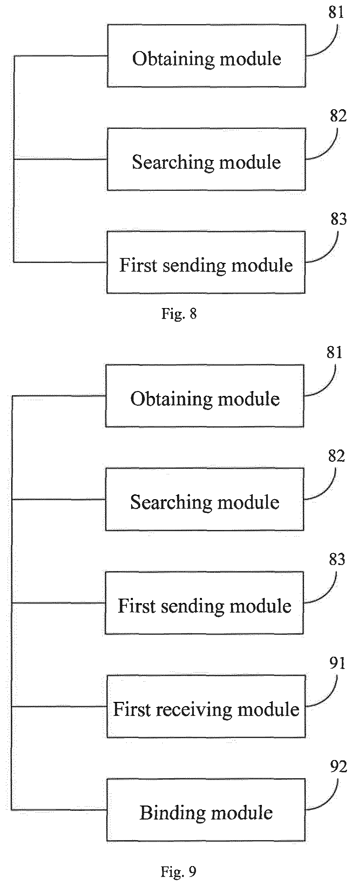

Corresponding to the above method for processing interactions between devices provided by embodiments of the present disclosure, embodiments of the present disclosure further provide an apparatus used in a gateway for processing interactions between devices, as shown in Fig. 8, including:
an obtaining module 81 configured to obtain an interaction triggering message sent from a first device belonging to the gateway and including an identification of the first device;
a searching module 82 configured to search for an interaction execution message of a second device corresponding to the interaction triggering message from an interaction binding message pre-stored, according to the identification of the first device, in which the second device belongs to the gateway and the interaction binding message includes an interaction logic between the first device and the second device;
a first sending module 83 configured to send the interaction execution message to the second device, in which the second device is configured to operate according to the interaction execution message.

In an embodiment, the interaction binding message includes the identification of the first device, an identification of the second device, the interaction triggering message of the first device and the interaction execution message of the second device corresponding to the interaction triggering message.

In an embodiment, the interaction execution message includes operation parameters of the second device.

As shown in Fig. 9, in an embodiment, the above apparatus further includes:
a first receiving module 91 configured to receive and store the interaction binding message sent from a server;
a binding module 92 configured to establish a binding relationship between the first device and the second device according to the interaction binding message.

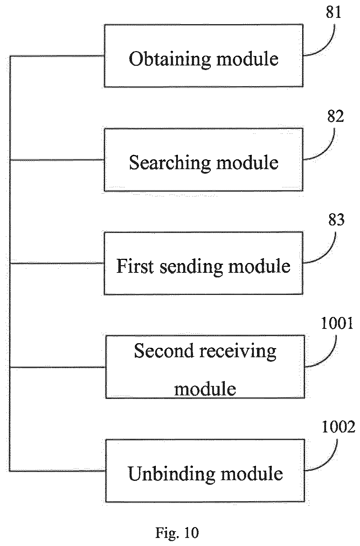

As shown in Fig. 10, in an embodiment, the above apparatus further includes:
a second receiving module 1001 configured to receive an unbinding instruction for the binding relationship sent from the server;
an unbinding module 1002 configured to unbind the binding relationship according to the unbinding instruction.

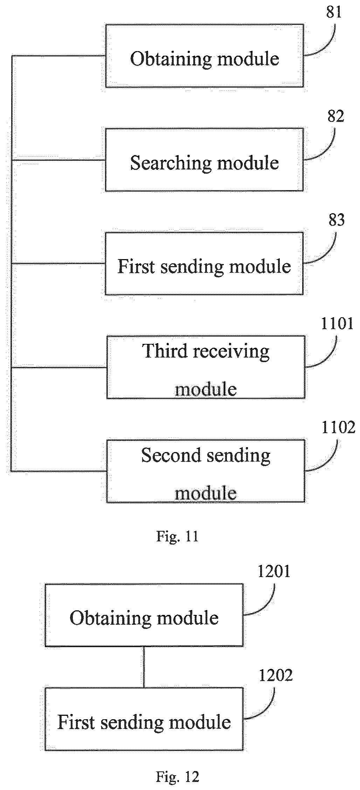

As shown in Fig. 11, in an embodiment, the above apparatus further includes:
a third receiving module 1101 configured to receive a query instruction for the interaction binding message of the gateway sent from the server;
a second sending module 1102 configured to send a corresponding interaction binding message to the server according to the query instruction.

Corresponding to the above method for processing interactions between devices provided by embodiments of the present disclosure, embodiments of the present disclosure further provide an apparatus used in a server for processing interactions between devices, as shown in Fig. 12, including:
an obtaining module configured 1201 to obtain an interaction binding message, the interaction binding message including an interaction logic between a first device and a second device, the first device and the second device belonging to a same gateway;
a first sending module 1202 configured to send the interaction binding message to the gateway to be stored and to establish a binding relationship between the first device and the second device.

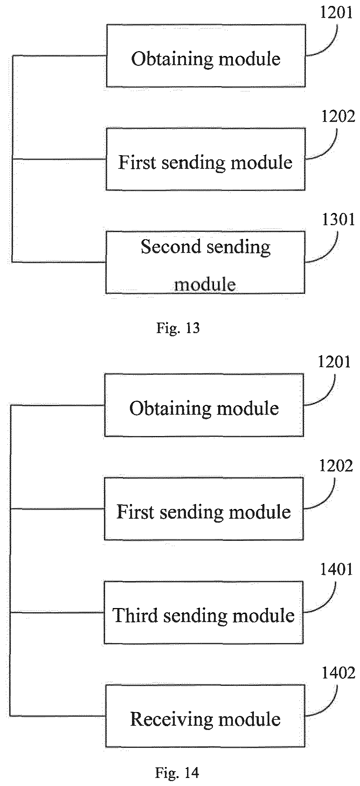

As shown in Fig. 13, in an embodiment, the above apparatus further includes:
a second sending module 1301 configured to send an unbinding instruction for the binding relationship to the gateway, so that the gateway unbinds the binding relationship according to the unbinding instruction.

As shown in Fig. 14, in an embodiment of the present disclosure, the above apparatus further includes:
a third sending module 1401 configured to send a query instruction for the interaction binding message of the gateway to the gateway;
a receiving module 1402 configured to receiving a corresponding interaction binding message sent from the gateway according to the query instruction.

With respect to the apparatus in the above embodiments, the specific manners for performing operations for individual modules therein have been described in detail in the embodiments regarding the methods, which will not be elaborated herein.

The present disclosure also provides an apparatus used in a gateway for processing interactions between devices, including:
a processor;
a memory for storing instructions executable by the processor;
in which the processor is configured to:
   obtain an interaction triggering message sent from a first device belonging to the gateway and comprising an identification of the first device;
   search for an interaction execution message of a second device corresponding to the interaction triggering message from an interaction binding message pre-stored, according to the identification of the first device, in which the second device belongs to the gateway and the interaction binding message includes an interaction logic between the first device and the second device;
   send the interaction execution message to the second device, in which the second device is configured to operate according to the interaction execution message.

The above processor is further configured to:
receive and store the interaction binding message sent from a server;
establish a binding relationship between the first device and the second device according to the interaction binding message.

The interaction binding message includes the identification of the first device, an identification of the second device, the interaction triggering message of the first device and the interaction execution message of the second device corresponding to the interaction triggering message.

The above processor is further configured to:
receive an unbinding instruction for the binding relationship sent from the server;
unbind the binding relationship according to the unbinding instruction.

The interaction execution message includes operation parameters of the second device.

The above processor is further configured to:
receive a query instruction for the interaction binding message of the gateway sent from the server;
send a corresponding interaction binding message to the server according to the query instruction.

The present disclosure also provides an apparatus used in a server for processing interactions between devices, including:
a processor;
a memory for storing instructions executable by the processor;
in which the processor is configured to:
   obtain an interaction binding message, the interaction binding message including an interaction logic between a first device and a second device, the first device and the second device belonging to a same gateway;
   send the interaction binding message to the gateway to be stored and to establish a binding relationship between the first device and the second device.

The interaction binding message includes an identification of the first device, an identification of the second device, an interaction triggering message of the first device and an interaction execution message of the second device corresponding to the interaction triggering message.

The above processor is further configured to:
send an unbinding instruction for the binding relationship to the gateway, so that the gateway unbinds the binding relationship according to the unbinding instruction.

The above processor is further configured to:
send a query instruction for the interaction binding message of the gateway to the gateway;
receive a corresponding interaction binding message sent from the gateway according to the query instruction.

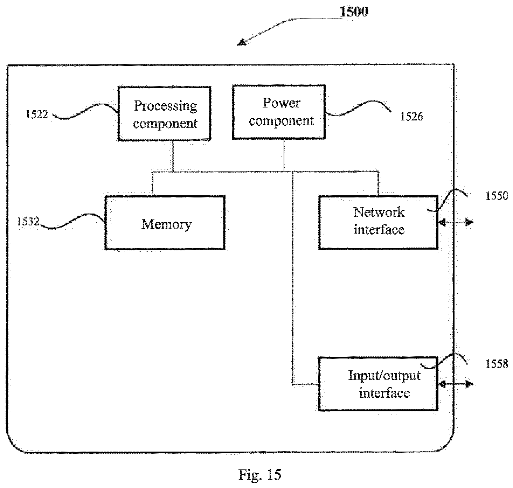

Fig. 15 is a block diagram of an apparatus 1900 for processing interactions between devices, according to an exemplary embodiment. For example, the apparatus 1500 may be provided as a server.

Referring to Fig. 15, the apparatus 1500 may include a processing component 1522 which further include one or more processors, and a memory resource represented by a memory 1532 and configured to store instructions executable by the processing component 1522, such as application programs. The application programs stored in the memory 1532 may include one or more modules , in which each module corresponds to a set of instructions. Further, the processing component 1522 may be configured to execute instructions so as to perform the above methods.

The apparatus 1500 may also include a power component 1526 configured to execute a power management of the apparatus 1500, a wired or wireless network interfaces 1550 configured to connect the apparatus 1500 to the internet, an input/output interfaces 1558. The apparatus 1500 may be operated based on an operating system stored in the memory 1532, such as Windows ServerTM, Mac OS XTM, UnixTM, LinuxTM, FreeBSDTM, or the like.

Other embodiments of the present disclosure will be apparent to those skilled in the art from consideration of the specification and practice of the present disclosure disclosed here.

## Claims

1. A method used in a gateway for processing interactions between devices, comprising:
obtaining an interaction triggering message sent from a first device connected to the gateway and comprising an identification of the first device (S101);
searching for an interaction execution message of a second device corresponding to the interaction triggering message from an interaction binding message pre-stored, according to the identification of the first device only, wherein the second device is connected to the gateway and the interaction binding message comprises the identification of the first device, an identification of the second device, and the interaction execution message of the second device corresponding to the interaction triggering message;
sending the interaction execution message to the second device, in which the second device is configured to operate according to the interaction execution message (S103), whereby when the interaction triggering message is obtained from the first device the second device executes the interaction execution message automatically.

2. The method of claim 1, further comprising:
receiving and storing the interaction binding message sent from a server (S201);
establishing a binding relationship between the first device and the second device according to the interaction binding message (S202).

3. The method of claim 1 or 2, wherein the interaction binding message further comprises the interaction triggering message of the first device.

4. The method of claim 2 or 3, further comprising:
receiving an unbinding instruction for the binding relationship sent from the server (S301);
unbinding the binding relationship according to the unbinding instruction (S302).

5. The method of any one of claims 1 to 4, wherein the interaction execution message comprises operation parameters of the second device.

6. The method of any one of claims 1 to 5, further comprising:
receiving a query instruction for the interaction binding message of the gateway sent from the server (S401);
sending a corresponding interaction binding message to the server according to the query instruction (S402).

7. An apparatus used in a gateway for processing interactions between devices, comprising:
an obtaining module (81) configured to obtain an interaction triggering message sent from a first device connected to the gateway and comprising an identification of the first device;
a searching module (82) configured to search for an interaction execution message of a second device corresponding to the interaction triggering message from an interaction binding message pre-stored, according to the identification of the first device only, wherein the second device is connected to the gateway and the interaction binding message comprises the identification of the first device, an identification of the second device, and the interaction execution message of the second device corresponding to the interaction triggering message;
a first sending module (82) configured to send the interaction execution message to the second device, in which the second device is configured to operate according to the interaction execution message, whereby when the interaction triggering message is obtained from the first device the second device executes the interaction execution message automatically.

8. The apparatus of claim 7, further comprising:
a first receiving module (91) configured to receive and store the interaction binding message sent from a server;
a binding module (92) configured to establish a binding relationship between the first device and the second device according to the interaction binding message.

9. The apparatus of claim 7 or 8, wherein the interaction binding message comprises the identification of the first device, an identification of the second device, the interaction triggering message of the first device and the interaction execution message of the second device corresponding to the interaction triggering message.

10. The apparatus of claim 8 or 9, further comprising:
a second receiving module (1001) configured to receive an unbinding instruction for the binding relationship sent from the server;
an unbinding module (1002) configured to unbind the binding relationship according to the unbinding instruction.

11. The apparatus of any one of claims 7 to 10, wherein the interaction execution message comprises operation parameters of the second device.

12. The apparatus of any one of claims 7 to 11, further comprising:
a third receiving module (1101) configured to receive a query instruction for the interaction binding message of the gateway sent from the server;
a second sending module (1102) configured to send a corresponding interaction binding message to the server according to the query instruction.

13. An apparatus according to claim 7, comprising:
a processor;
a memory for storing instructions executable by the processor;
wherein the processor is configured to perform the method for processing interactions between devices according to any one of claims 1 to 5.

14. Anon-transitory computer-readable storage medium having stored therein instructions that, when executed by a processor of a gateway, causes the gateway to perform a method for processing interactions between devices according to any one of claims 1 to 6.

## Patentansprüche

1. Verfahren zur Anwendung in einem Gateway zum Verarbeiten von Interaktionen zwischen Geräten, das Folgendes beinhaltet:
Einholen einer Interaktionsauslösenachricht, die von einem mit dem Gateway verbundenen ersten Gerät gesendet wird und eine Identifikation des ersten Geräts (S101) enthält;
Suchen nach einer Interaktionsausführungsnachricht eines zweiten Geräts entsprechend der Interaktionsauslösenachricht von einer Interaktionsbindungsnachricht, die nur gemäß der Identifikation des ersten Geräts vorgespeichert wurde, wobei das zweite Gerät mit dem Gateway verbunden ist und die Interaktionsbindungsnachricht die Identifikation des ersten Gerätes, eine Identifikation des zweites Geräts und die Interaktionsausführungsnachricht des zweiten Geräts entsprechend der Interaktionsauslösenachricht beinhaltet;
Senden der Interaktionsausführungsnachricht zu dem zweiten Gerät, wobei das zweite Gerät zum Arbeiten gemäß der Interaktionsausführungsnachricht (S103) konfiguriert ist, so dass, wenn die Interaktionsauslösenachricht vom ersten Gerät eingeholt wird, das zweite Gerät die Interaktionsausführungsnachricht automatisch ausführt.

2. Verfahren nach Anspruch 1, das ferner Folgendes beinhaltet:
Empfangen und Speichern der von einem Server (S201) gesendeten Interaktionsbindungsnachricht;
Feststellen einer Bindungsbeziehung zwischen dem ersten Gerät und dem zweiten Gerät gemäß der Interaktionsbindungsnachricht (S202).

3. Verfahren nach Anspruch 1 oder 2, wobei die Interaktionsbindungsnachricht ferner die Interaktionsauslösenachricht des ersten Geräts beinhaltet.

4. Verfahren nach Anspruch 2 oder 3, das ferner Folgendes beinhaltet:
Empfangen eines Entbindungsbefehls für die vom Server (S301) gesendete Bindungsbeziehung;
Entbinden der Bindungsbeziehung gemäß dem Entbindungsbefehl (S302).

5. Verfahren nach einem der Ansprüche 1 bis 4, wobei die Interaktionsausführungsnachricht Betriebsparameter des zweiten Geräts beinhaltet.

6. Verfahren nach einem der Ansprüche 1 bis 5, das ferner Folgendes beinhaltet:
Empfangen eines Abfragebefehls für die Interaktionsbindungsnachricht des Gateway wie vom Server (S401) gesendet;
Senden einer entsprechenden Interaktionsbindungsnachricht zum Server gemäß dem Abfragebefehl (S402).

7. Vorrichtung, die in einem Gateway zum Verarbeiten von Interaktionen zwischen Geräten benutzt wird, die Folgendes umfasst:
ein Einholmodul (81), konfiguriert zum Einholen einer Interaktionsauslösenachricht, die von einem mit dem Gateway verbundenen ersten Gerät gesendet wird und eine Identifikation des ersten Geräts beinhaltet;
ein Suchmodul (82), konfiguriert zum Suchen nach einer Interaktionsausführungsnachricht eines zweiten Geräts entsprechend der Interaktionsauslösenachricht von einer Interaktionsbindungsnachricht, vorgespeichert nur anhand der Identifikation des ersten Geräts, wobei das zweite Gerät mit dem Gateway verbunden ist und die Interaktionsbindungsnachricht die Identifikation des ersten Geräts, eine Identifikation des zweiten Geräts und die Interaktionsausführungsnachricht des zweiten Geräts entsprechend der Interaktionsauslösenachricht beinhaltet;
ein erstes Sendemodul (82), konfiguriert zum Senden der Interaktionsausführungsnachricht zum zweiten Gerät, wobei das zweite Gerät zum Arbeiten gemäß der Interaktionsausführungsnachricht konfiguriert ist, so dass, wenn die Interaktionsauslösenachricht vom ersten Gerät eingeholt wird, das zweite Gerät die Interaktionsausführungsnachricht automatisch ausführt.

8. Vorrichtung nach Anspruch 7, die ferner Folgendes umfasst:
ein erstes Empfangsmodul (91), konfiguriert zum Empfangen und Speichern der von einem Server gesendeten Interaktionsbindungsnachricht;
ein Bindungsmodul (92), konfiguriert zum Einrichten einer Bindungsbeziehung zwischen dem ersten Gerät und dem zweiten Gerät gemäß der Interaktionsbindungsnachricht.

9. Vorrichtung nach Anspruch 7 oder 8, wobei die Interaktionsbindungsnachricht die Identifikation des ersten Geräts, eine Identifikation des zweiten Geräts, die Interaktionsauslösenachricht des ersten Geräts und die Interaktionsausführungsnachricht des zweiten Geräts entsprechend der Interaktionsauslösenachricht beinhaltet.

10. Vorrichtung nach Anspruch 8 oder 9, die ferner Folgendes umfasst:
ein zweites Empfangsmodul (1001), konfiguriert zum Empfangen eines Entbindungsbefehls für die vom Server gesendete Bindungsbeziehung;
ein Entbindungsmodul (1002), konfiguriert zum Entbinden der Bindungsbeziehung gemäß dem Entbindungsbefehl.

11. Vorrichtung nach einem der Ansprüche 7 bis 10, wobei die Interaktionsausführungsnachricht Betriebsparameter des zweiten Geräts beinhaltet.

12. Vorrichtung nach einem der Ansprüche 7 bis 11, die ferner Folgendes umfasst:
ein drittes Empfangsmodul (1101), konfiguriert zum Empfangen eines Abfragebefehls für die vom Server gesendete Interaktionsbindungsnachricht des Gateway;
ein zweites Sendemodul (1102), konfiguriert zum Senden einer entsprechenden Interaktionsbindungsnachricht zum Server gemäß dem Abfragebefehl.

13. Vorrichtung nach Anspruch 7, die Folgendes umfasst:
einen Prozessor;
einen Speicher zum Speichern von vom Prozessor ausführbaren Befehlen;
wobei der Prozessor zum Ausführen des Verfahrens zum Verarbeiten von Interaktionen zwischen Geräten nach einem der Ansprüche 1 bis 5 konfiguriert ist.

14. Nichtflüchtiges, computerlesbares Speichermedium, auf dem Befehle gespeichert sind, die bei Ausführung durch einen Prozessor eines Gateway bewirken, dass das Gateway ein Verfahren zum Verarbeiten von Interaktionen zwischen Geräten nach einem der Ansprüche 1 bis 6 ausführt.

## Revendications

1. Procédé utilisé dans une passerelle pour traiter des interactions entre des dispositifs, comprenant :
l'obtention d'un message de déclenchement d'interaction envoyé par un premier dispositif connecté à la passerelle et comprenant une identification du premier dispositif (S101);
la recherche d'un message d'exécution d'interaction d'un second dispositif correspondant au message de déclenchement d'interaction dans un message de liaison d'interaction prémémorisé, conformément à l'identification du premier dispositif uniquement, dans lequel le second dispositif est connecté à la passerelle et le message de liaison d'interaction comprend l'identification du premier dispositif, une identification du second dispositif, et le message d'exécution d'interaction du second dispositif correspondant au message de déclenchement d'interaction ;
l'envoi du message d'exécution d'interaction au second dispositif, dans lequel le second dispositif est configuré pour fonctionner conformément au message d'exécution d'interaction (S103), si bien que lorsque le message de déclenchement d'interaction est obtenu du premier dispositif le second dispositif exécute automatiquement le message d'exécution d'interaction.

2. Procédé selon la revendication 1, comprenant en outre :
la réception et la mémorisation du message de liaison d'interaction envoyé par un serveur (S201) ;
l'établissement d'une relation de liaison entre le premier dispositif et le second dispositif conformément au message de liaison d'interaction (S202).

3. Procédé selon la revendication 1 ou 2, dans lequel le message de liaison d'interaction comprend en outre le message de déclenchement d'interaction du premier dispositif.

4. Procédé selon la revendication 2 ou 3, comprenant en outre
la réception d'une instruction de démantèlement de la relation de liaison envoyée par le serveur (S301) ;
le démantèlement de la relation de liaison conformément à l'instruction de démantèlement (S302).

5. Procédé selon l'une quelconque des revendications 1 à 4, dans lequel le message d'exécution d'interaction comprend des paramètres d'exploitation du second dispositif.

6. Procédé selon l'une quelconque des revendications 1 à 5, comprenant en outre :
la réception d'une instruction d'interrogation portant sur le message de liaison d'interaction de la passerelle envoyée par le serveur (S401) ;
l'envoi d'un message de liaison d'interaction correspondant au serveur conformément à l'instruction d'interrogation (S402).

7. Appareil utilisé dans une passerelle pour traiter des interactions entre des dispositifs, comprenant :
un module d'obtention (81) configuré pour obtenir un message de déclenchement d'interaction envoyé par un premier dispositif connecté à la passerelle et comprenant une identification du premier dispositif ;
un module de recherche (82) configuré pour rechercher un message d'exécution d'interaction d'un second dispositif correspondant au message de déclenchement d'interaction dans un message de liaison d'interaction prémémorisé, conformément à l'identification du premier dispositif uniquement, dans lequel le second dispositif est connecté à la passerelle et le message de liaison d'interaction comprend l'identification du premier dispositif, une identification du second dispositif, et le message d'exécution d'interaction du second dispositif correspondant au message de déclenchement d'interaction ;
un premier module d'envoi (82) configuré pour envoyer le message d'exécution d'interaction au second dispositif, dans lequel le second dispositif est configuré pour fonctionner conformément au message d'exécution d'interaction, si bien que lorsque le message de déclenchement d'interaction est obtenu du premier dispositif le second dispositif exécute automatiquement le message d'exécution d'interaction.

8. Appareil selon la revendication 7, comprenant en outre :
un premier module de réception (91) configuré pour recevoir et mémoriser le message de liaison d'interaction envoyé par un serveur ;
un module de liaison (92) configuré pour établir une relation de liaison entre le premier dispositif et le second dispositif conformément au message de liaison d'interaction.

9. Appareil selon la revendication 7 ou 8, dans lequel le message de liaison d'interaction comprend l'identification du premier dispositif, une identification du second dispositif, le message de déclenchement d'interaction du premier dispositif est le message d'exécution d'interaction du second dispositif correspondant au messages de déclenchement d'interaction.

10. Appareil sur la revendication 8 ou 9, comprenant en outre
un second module de réception (1001) configuré pour recevoir et mémoriser une instruction de démantèlement de la relation de liaison envoyée par le serveur ;
un module de démantèlement (1002) configuré pour démanteler la relation de liaison conformément à l'instruction de démantèlement.

11. Appareil selon l'une quelconque des revendications 7 à 10, dans lequel le message d'exécution d'interaction comprend des paramètres d'exploitation du second dispositif.

12. Appareil selon l'une quelconque des revendications 7 à 11, comprenant en outre :
un troisième module de réception (1101) configuré pour recevoir une instruction d'interrogation portant sur le message de liaison d'interaction de la passerelle envoyée par le serveur ;
un second module d'envoi (1102) configuré pour envoyer un message de liaison d'interaction correspondant au serveur conformément à l'instruction d'interrogation.

13. Appareil selon la revendication 7, comprenant :
un processeur ;
une mémoire de mémorisation d'instructions exécutables par le processeur ;
dans lequel le processeur est configuré pour exécuter le procédé de traitement d'interactions entre des dispositifs selon l'une quelconque des revendications 1 à 5.

14. Support de mémorisation non transitoire lisible par ordinateur sur lequel sont mémorisées des instructions qui, à leur exécution par un processeur d'une passerelle, amènent la passerelle à exécuter un procédé de traitement d'interactions entre des dispositifs selon l'une quelconque des revendications 1 à 6.
